# EUROPÄISCHE PATENTANMELDUNG

(11) **EP 1 502 843 A2**
(43) Veröffentlichungstag der Anmeldung: **02.02.2005**
(21) Anmeldenummer: 04014422.2
(22) Anmeldetag: 19.06.2004
(51) Int. Cl.: B62D 55/04

(54) **Unbemanntes Sonderfahrzeug mit Allradantrieb**

(30) Priorität: 31.07.2003 DE 10334956
(71) Anmelder: Rheinmetall Landsysteme GmbH, 24159 Kiel (DE)
(72) Erfinder: Eckhoff, Detlev, 24238 Martensrade (DE)
(74) Vertreter: Dietrich, Barbara, Dipl.-Ing.

(57) **Zusammenfassung**

Vorgeschlagen wird ein Fahrzeug mit verbesserter Beweglichkeit eines Radfahrwerks mit einer Plattform (1), mittels vier einzeln angetriebenen, gelenkten und an Tragarmen (4) befestigten Rädern (3) und zwei temporär zuschaltbaren Bandantrieben (6) links und rechts seitlich am Fahrgestell (2).

## Beschreibung

Die Erfindung betrifft ein Fahrzeug, insbesondere ein unbemanntes Aufklärungs- und Manipulatorfahrzeug, nach den Merkmalen des Oberbegriffs des Patentanspruchs 1.

Es ist bekannt, dass die Beweglichkeit insbesondere eines kleinen Fahrzeugs, beispielsweise eines unbemannten und ferngelenkten Fahrzeugs zur Erkundung und weitere Zwecke, einen hohen Stellenwert besitzt. Ein solches Fahrzeug muss auch an versteckten und unzugänglichen Orten einsetzbar sein. Dazu gehören verschiedene Bodenbeschaffenheiten und auch Treppen in einem Gebäude, die es zu überwinden gilt.

Die Firma telerob Gesellschaft für Fernhantierungstechnik vertreibt unter den Namen "tEODor - telerob Explosive Ordnance and observation robot" ein Manipulatorfahrzeug, welches über zwei jeweils außen an der Gehäuselängsseite Kettenantriebe verfügt.

Andere Ausführungen sind speziell für die Erkundung von Rohrleitungen ausgelegt oder besitzen drei, vier oder fünf Räder mit einer individuellen Steuerung für jedes Rad, um zu lenken und vorwärts zu bewegen.

Ein Fahrzeug mit Allradantrieb ist aus der DE 40 05 356 A1 bekannt. Dabei weist jedes Fahrwerk mindestens zwei antreibbare Räder und je einen Motor auf. Jedes Rad, das auch als Radkette ausgebildet sein kann, ist einzeln ansteuerbar, so dass ein Wenden oder Drehen auf der Stelle ermöglicht wird.

Ein Fahrzeug mit mehreren Bewegungsantrieben wird in der DE 40 05 357 A1 vorgeschlagen. Das Fahrzeug weist mehreren Fahrwerke auf, deren Achslagen zueinander in mindestens zwei Freiheitsgraden verstellbar sind.

Weitere Fahrwerke von Fahrzeugen sehen zum Beispiel vor, anstelle von Rädern für die Fortbewegung auch Gehvorrichtungen, die zum Beispiel dem Bein des Menschen nachempfunden sind, einzusetzen, um damit besser Treppen und Hindernisse überwinden zu können.

In der gattungsmäßigen WO 03/049664 A2 wird ein u.a. treppensteigender Rollstuhl beschrieben, der Treppen und auch andere Hindernisse überwinden kann mittels eines speziellen Bandantriebs unterhalb des Stuhls zusätzlich zu seinen vier Rädern, auf denen er normalerweise steht bzw. durch die der Stuhl bewegt wird.

Aufgabe der Erfindung ist es, ein Fahrzeug aufzuzeigen, welches ein verbessertes Fahrwerk besitzt und eine Verbesserung der Beweglichkeit des Fahrzeugs bewirkt.

Gelöst wird die Aufgabe durch die Merkmale des Anspruchs 1.

Die Lösung der Aufgabe erfolgt erfindungsgemäß dadurch, dass mehrere, wenigstens jedoch vier, einzeln antreibbare Räder, welche mittels beweglichen Hebeln im Abstand am Fahrgestellgehäuse befestigt sind, und zwei Band- oder Kettenantriebe, welche direkt um das Fahrgestellgehäuse laufen, für den Vortrieb angeordnet sind.

Die Vorteile der Erfindung liegen vor allem darin, dass beide Antriebe, Räder oder Band, auch völlig unabhängig voneinander oder nacheinander einsetzbar sind. Die Räder können an ihren Hebeln hochgedreht werden, so dass die Räder oberhalb des Fahrgestellgehäuses stehen und nur der Bandantrieb zum Einsatz kommt. Aber auch der gleichzeitige Antrieb von Rad und Band, zum Beispiel beim Hindernisüberwinden oder Treppensteigen, ist vorteilhaft einsetzbar. Mittels der an drehbaren Hebeln angebrachten Räder ist auch die Bodenfreiheit des Fahrzeugs beliebig einstellbar. Im Normalfall wird der energiesparende Radantrieb eingesetzt und nur im Einzelfall bei entsprechenden Hindernissen und Bodenbeschaffenheiten wird der energieintensive Kettenantrieb miteingesetzt.
Das Grundfahrgestell ist zudem so gestaltet, dass verschiedene Aufbauten adaptiert werden können.

Ein Ausführungsbeispiel der Erfindung ist in der Zeichnung schematisch dargestellt und wird im folgenden näher beschrieben.
Es zeigen:
- Fig. 1: ein Fahrzeug mit Mastaufbau in Betriebsstellung
- Fig. 2: das Fahrzeug ohne Aufbau in einer Transportstellung
- Fig. 3: das Fahrzeug mit geringer Bodenfreiheit
- Fig. 4: das Fahrzeug mit großer Bodenfreiheit
- Fig. 5: das Fahrzeug bei Hangquerfahrt
- Fig. 6: eine Draufsicht auf das Fahrzeug mit zwei gelenkten Rädern
- Fig. 7: eine Draufsicht auf das Fahrzeug mit vier gelenkten Rädern
- Fig. 8: eine weitere Draufsicht auf das Fahrzeug mit alternativ eingestellten Rädern
- Fig. 9: Prinzip der Hindernisüberwindung mittels Rad
- Fig. 10: Prinzip der Hindernisüberwindung mittels Band
- Fig. 11: Prinzip der Hindernisüberwindung beim Treppensteigen
- Fig. 12: Prinzip der Hindernisüberwindung beim Überfahren eines Grabens

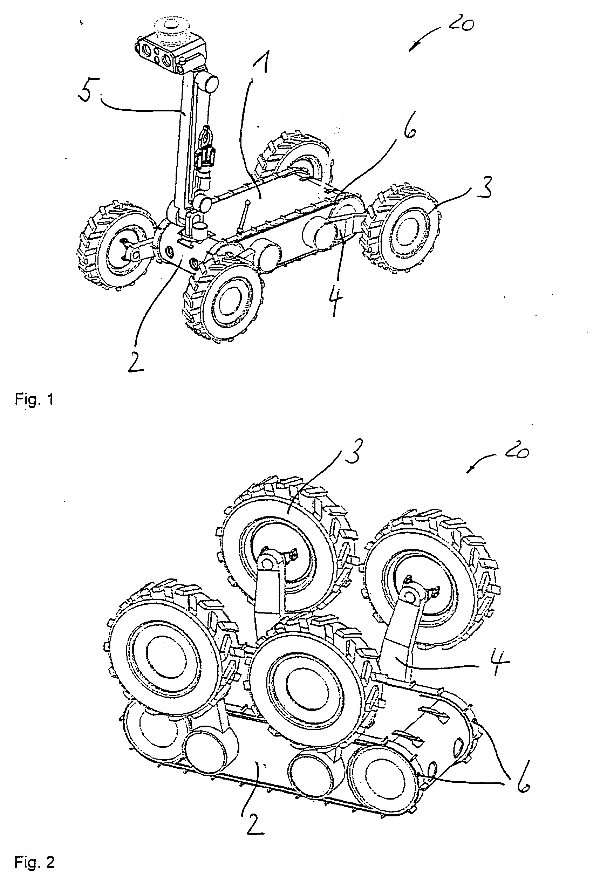

Fig. 1 zeigt eine Fahrgestellplattform 1 eines hier vereinfacht dargestellten Fahrzeug 20, hier eines Manipulatorfahrzeugs, mit einem Gehäuse 2 und Rädern 3, welche mittels Hebeln 4 am Gehäuse 2 drehbar befestigt sind. Ein Mast 5 mit Geräten ist als Missionsnutzlast auf der Plattform 1 aufgebaut. Zwei antreibbare Bänder 6 sind direkt um die Außenkontur des Pallformgehäuses 2 in Längsrichtung geführt.

Die modular ausgelegte Plattform 1 besitzt in diesem Ausführungsbeispiel ein 4x4 Radfahrgestell (Räder 3 mit den zugehörigen Hebeln 4), welches zusätzlich mit einem temporär zuschaltbaren Band- oder Kettenlaufwerken 6 ausgerüstet ist. Die Plattform 1 besitzt des Weiteren einen elektrischen Antriebsstrang (nicht näher dargestellt), zu dem auch eine zentrale Energieversorgung gehört. Die Plattform 1 verfügt über verschiedene mechanische und elektrische Schnittstellen für den Aufbau und die Adaption von verschiedenen Funktions- und Missionsmodulen. Dazu gehören, nicht näher dargestellt, ein Aufklärungs-, ein Manipulator-, ein Kommunikations- und ein Systemsteuermodul.

Die Plattform 1 weist ein Leichtbaugehäuse 2 auf und ist vorzugsweise zweischalig aufgebaut. Die Energieversorgung, die Antriebsmotore für den Kettenantrieb und die Tragarmverstellung sowie eine Steuer- und Regelungseinheit für die Antriebsmotore sind im Plattformgehäuse 2 eingebaut und nicht näher dargestellt.

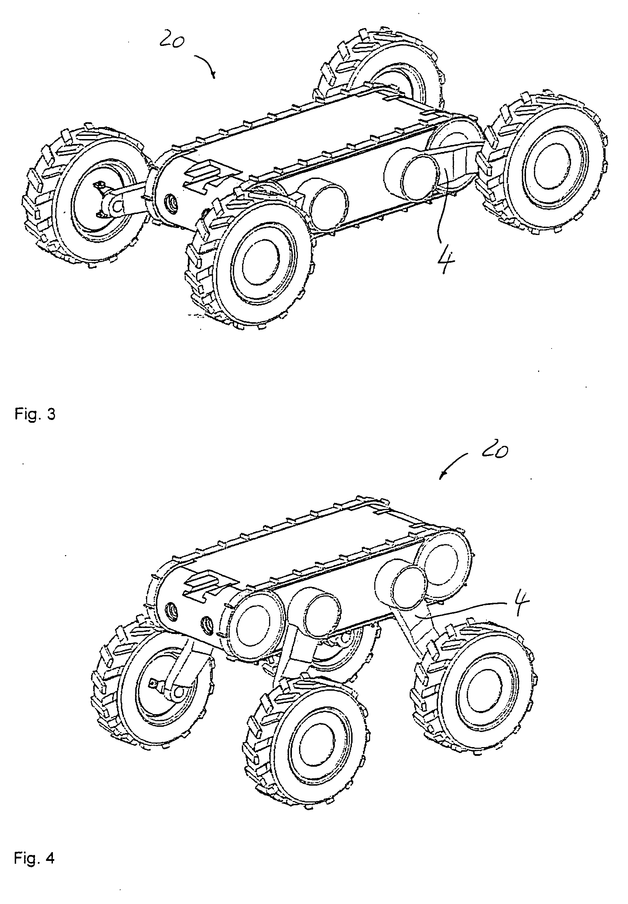

Die Basis des Fahrwerks 11 bilden das mittels Hebel 4 bzw. Tragarm höhenverstellbare 4x4 Radfahrwerk mit den Rädern 3. Dazu sind die vorderen beiden Tragarme 4 vorzugsweise als geschobene und die hinteren beiden als gezogene Tragarme 4 angeordnet. Die Höhenverstellung der Tragarme 4 erfolgt über die innerhalb der Plattform 2 eingebauten Getriebemotore.
Die Höhenverstellung besitzt 3 Grundstellungen:
- Transportposition (Fig. 2),
- Position mit geringer Bodenfreiheit (Fig. 3) und
- Position mit großer Bodenfreiheit (Fig. 4)
   und ist zudem stufenlos in jeder Höhe einstellbar.

Fig. 2 zeigt die in eine Transportstellung des Fahrzeuges 20 mittels der Hebel 4 hochgedrehten Räder 3 über dem Gehäuse 2. Die Transportposition dient zur Minimierung der Grundflächenabmaße und verbessert somit die Integrierbarkeit in ein nicht näher dargestelltes Trägerfahrzeug mit geringem Stauvolumen.

In Fig. 3 sind die Räder 3 mittels Hebel so eingestellt, dass eine geringe Bodenfreiheit zwischen Plattformgehäuse 2 und Boden erreicht wird. Fig. 4 zeigt die Einstellung der Bodenfreiheit aus Fig. 3 für eine große Bodenfreiheit. Die Position mit geringer Bodenfreiheit ist für das Fahren mit hoher Geschwindigkeit auf relativ ebenen Bodenbeschaffenheiten vorgesehen. In dieser Position ist der Schwerpunkt des Manipulatorfahrzeuges 20 sehr tief. Somit wird die Kippsicherheit bzw. Straßenlage optimiert. Diese Kippsicherheit ermöglicht das Befahren von steilen (ebenen) Hängen.
Sollte das Fahrzeug 20 beispielsweise bei der geringen Bodenfreiheit aufsetzen bzw. steckenbleiben, besteht die Möglichkeit, die Plattform 1 hochzufahren und somit zu befreien. Sowohl das Detektieren der nicht mehr gegebenen Bewegungsfreiheit und eine hierauf abgestimmte Funktionssequenz können sowohl manuell als auch automatisch erfolgen.

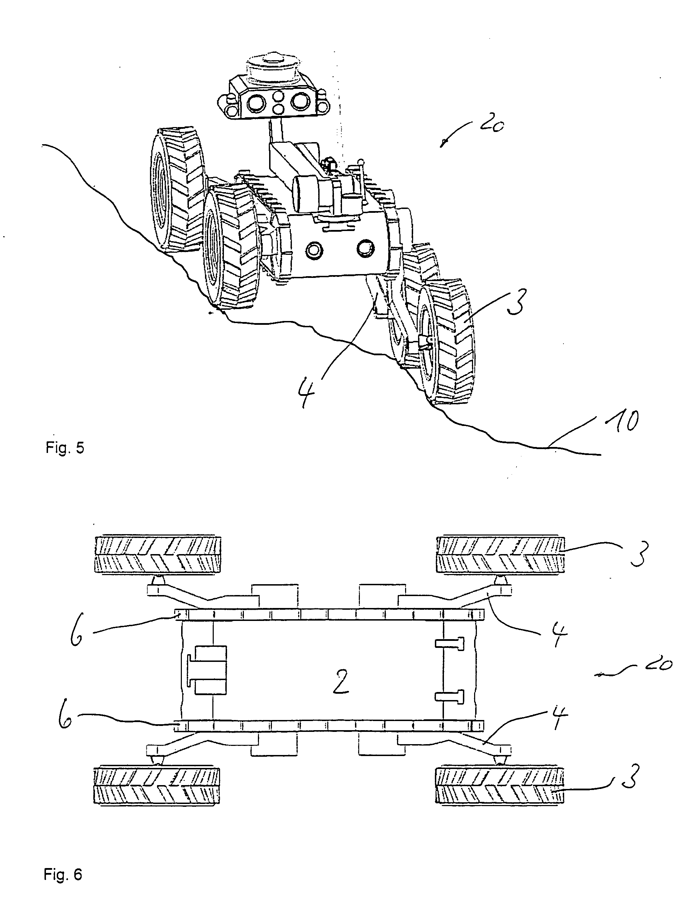

Eine weitere Funktion des speziellen Radfahrwerks ist das Fahren mit horizontierter Plattform. Fig. 5 zeigt diese Fahren mit horizontierter Plattform 1 in unebenem Gelände 10 und bei Querhangfahrt. Dies wird erreicht mittels Einstellung des Hebels 4 bezüglich der Radposition relativ zum Plattformgehäuse 2 für jedes einzelne Rad 3 der vier Räder.
Dabei wird die Plattform 1 in einer ebenen Lage mittels Einstellung der Räder 3 bzw. ihrer Hebel 4 gehalten.

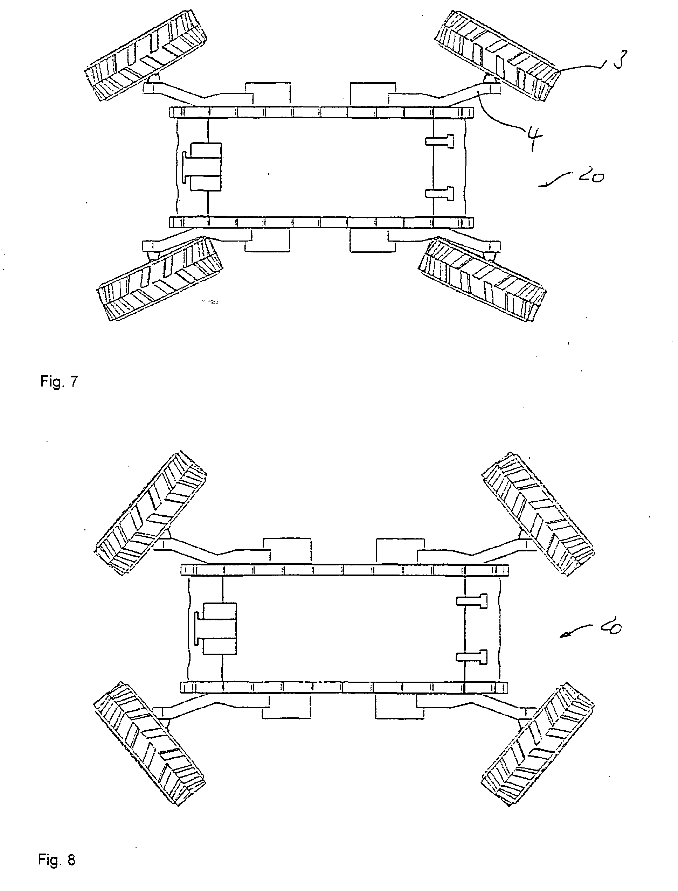

Jeder der vier Hebel bzw. Tragarme 4 ist mit einer bekannten, beispielsweise als ein Rotationssystem ausgebildeten Federungs- und Dämpfungseinheit für das jeweilige Rad 3 ausgerüstet. Die Einstellung der Federungs- und Dämpfungscharakteristik kann unterschiedlich für die hinteren und die vorderen Tragarme 4 vorgenommen werden und hat direkten Einfluss auf eine maximale Geschwindigkeit des Fahrzeuges 20, da je härter diese eingestellt sind, desto schneller (bei günstigen Fahrbahnbedingungen) das Fahrzeug 20 ist. Die Lenkung der Plattform 1 wird mittels einer 4x4 Achsschenkellenkung als Allradlenkung ausgeführt. Fig. 6 und Fig. 7 zeigen das Lenken für eine Richtungsänderung der Plattform 1 mittels individueller Einstellung jedes Rades 3 um eine Hochachse, welche am Befestigungspunkt des Rades 3 am Hebelende des Hebels 4 gebildet wird.

Bei entsprechender Einstellung der Lenkung und der Antriebe ist ein Fahren um die eigene Hochachse erreichbar. Fig. 8 zeigt das Drehen der Plattform 1 um sich selbst bzw. eine gedachte Hochachse im Mittelpunkt der Plattform 1 bei entsprechender Einstellung und Antrieb jedes einzelnen Rades 3 der vier Räder.

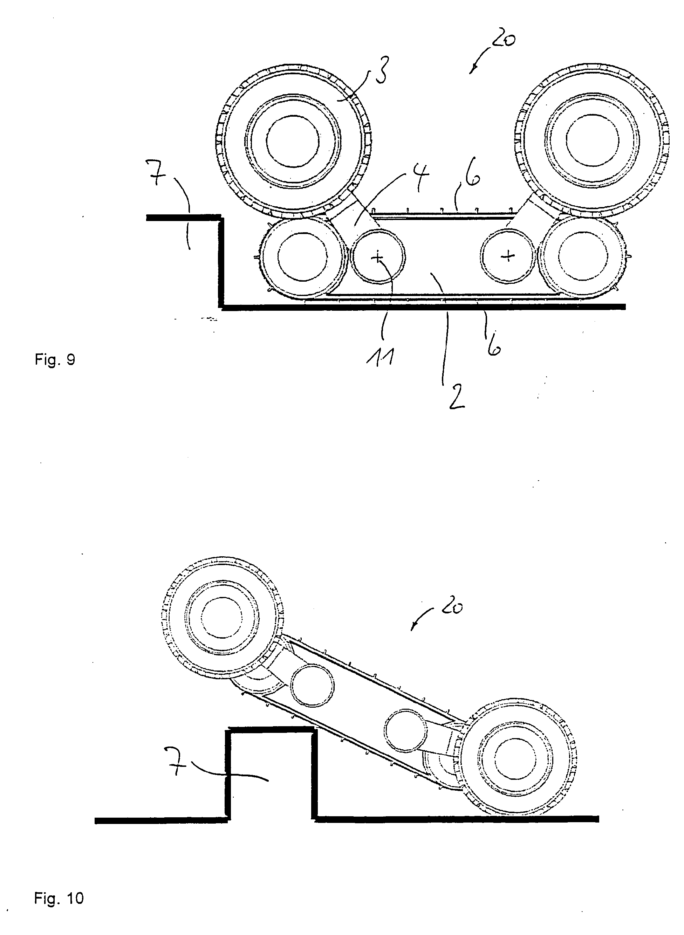

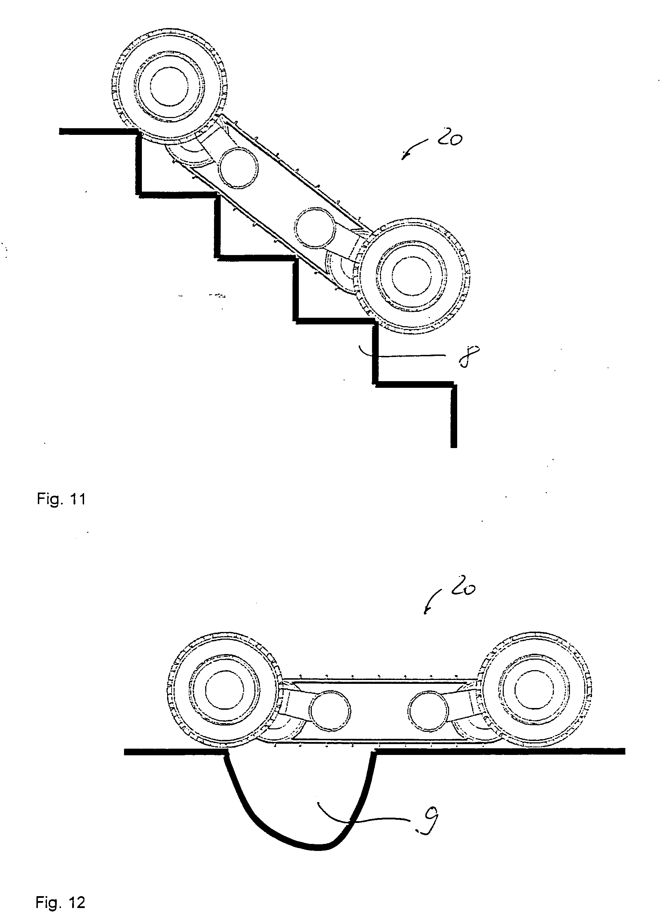

Für das Überwinden von Einzelhindernissen, zum Beispiel Bordsteinen, Baumstämmen, ist die Plattform 1 mit einem zuschaltbaren Kettenlaufwerk 6 ausgestattet. Dabei sind beispielsweise schmale Gummiketten bzw. -bänder außen am Plattformgehäuse 2 integriert, so dass sie praktisch in der Kontur des Gehäuses 2 verschwinden. Bei Überfahren und Aufsetzen des Gehäuses 2 auf ein Hindernis wird der Kettenantrieb 6 vorzugsweise automatisch zugeschaltet und die Plattform 1 über das Hindernis rutschend weiterbewegt. Beide Antriebe - Rad 3 und Kette 6 - ergänzen sich auch, indem die Vorderräder 3 als Kletterräder eingesetzt werden und die weitere Fortbewegung im Anschluss mittels Kette fortgeführt wird. Fig. 9 und Fig. 10 zeigen die Plattform 1 mit hochgedrehten Rädern 3 bei der Überwindung eines Hindernisses 7. Zunächst hebt das Rad 3 bei entsprechender Einstellung mittels Hebel 4, der um eine Achse 11 drehbar im Gehäuse 2 gelagert ist, die Plattform an bis der Bandantrieb 6 an dem Hindernis 7 angreifen kann. Eine Treppe 8 als "Mehrfachhindernis" wird in ähnlicher Weise überwunden, wie in Fig. 11 dargestellt. Das zusätzliche Kettenlaufwerk kann dazu mit speziellen Traktionsstiften, welche im Abstand über die Bandlänge angeordnet sind, ausgerüstet sein, wodurch eine Verbesserung der Überwindung von Hindernissen erreicht wird, zum Beispiel bei Treppenstufen.

Schließlich wird die Grabenüberschreitfähigkeit der Plattform mittels entsprechend an Hebeln 4 nach vorn und hinten ausgestellten Radpaaren 3 vergrößert, da die Plattformlänge entsprechend vergrößert wird. Fig. 12 zeigt die Vergrößerung der Grabenüberschreitweite der Plattform 1 bei entsprechend nach außen geschwenkten Rädern 3 bei der Überwindung eines Grabens 9.

Der Fahrantrieb des Radfahrwerks erfolgt vorzugsweise über innerhalb der Felge positionierte elektrische Radnarbenmotore (nicht näher dargestellt), welche als bürstenlose 3-Phasen Drehstrommotore mit einer vorgeschalteten Getriebestufe versehen sind. Um Drehzahlunterschiede zwischen Kurveninnerem und Kurvernäußerem bei gleich bleibender Traktion auszugleichen, ist vorgesehen, dass jeder der Motore einen mikrocomputergeteuerten Drehzahlsteller aufweist, der die Drehzahl entsprechend dem Lenkeinschlag unterschiedlich regelt. Die Berechnung der dafür notwendigen Drehzahlen erfolgt beispielsweise über die zentrale Steuer- und Regelungseinheit des Fahrzeugs. Der Antrieb des Kettenlaufwerks erfolgt vorzugsweise über Getriebemotore mit hoher Getriebe-übersetzung und geringer Antriebsleistung.

Unter Fahrzeug 20 werden alle Fortbewegungsmittel verstanden, die wenigstens vier Räder aufweisen, durch die das Fahrzeug 20 bewegbar ist und schließt Rollstühle etc. mit ein.

### Bezugszeichenliste

- 1: Fahrgestellplattform
- 2: Gehäuse
- 3: Rad
- 4: Hebel bzw. Tragarm
- 5: Mast
- 6: Band bzw. Kette
- 7: Hindernis
- 8: Treppenstufe
- 9: Graben
- 10: Bodenoberfläche
- 11: Drehachse
- 20: Fahrzeug / Manipulatorfahrzeug

## Patentansprüche

1. Fahrzeug, insbesondere ein kleines und unbemanntes Aufklärungs- und Manipulatorfahrzeug, mit einer Plattform (1) mit einem Fahrgestellgehäuse (2) als Chassis und mindestens vier Rädern (3), symmetrisch am Gehäuse (2) angeordnet, und zwei Band- oder Kettenantrieben (6) jeweils außen an der Gehäuselängsseite angeordnet und mit Steuereinrichtungen in der Plattform für den Antrieb der Räder (3) und der Bänder (6) und einer Einrichtung für die Energiebereitstellung für den Antrieb und weitere Funktionen in der Plattform (1), **dadurch gekennzeichnet, dass** die Räder (3) mittels drehbarem Hebel oder Tragarm (4) am Gehäuse (2) befestigt sind und die Bandantriebe (6) einzeln angetrieben, direkt um die Kontur des entsprechend geformten Fahrgestellgehäuses (2) herumlaufen.

2. Fahrzeug nach Anspruch 1, **dadurch gekennzeichnet, dass** die Plattform (1) so ausgestattet ist, dass Nutzlasten wie ein ausfahrbarer Mast (5) mit Beobachtungsgeräten aufmontiert werden können als Missionsmodul auf der Plattform (1).

3. Fahrzeug nach Anspruch 1 und 2, **dadurch gekennzeichnet, dass** die Plattform (1) eine Transportstellung einnehmen kann, in der die Räder (3) mittels drehbarem Hebel (4) ganz nach oben über das Gehäuse (2) gefahren werden.

4. Fahrzeug nach einem der oben genannten Ansprüche, **dadurch gekennzeichnet, dass** die Räder (3) mittels drehbarem Hebel oder Tragarm (4) auf eine geringe oder eine große Bodenfreiheit zwischen Plattform (1) und Boden eingestellt werden.

5. Fahrzeug nach einem der oben genannten Ansprüche, **dadurch gekennzeichnet, dass** die Plattform (1) mittels Einstellung der Hebel (4) an jedem Rad (3) bei unebenem Gelände und bei Querfahrt zu einem Hang horizontiert bewegt wird.

6. Fahrzeug nach einem der oben genannten Ansprüche, **dadurch gekennzeichnet, dass** die Plattform (1) mittels für jedes Rad (3) unabhängig voneinander vorgenommener Lenkeinstellung, gelenkt und angetrieben wird.

7. Fahrzeug nach Anspruch 6, **dadurch gekennzeichnet, dass** die Plattform (1) auch mittels Radfahrwerk um die Hochachse auf der Stelle gedreht wird.

8. Fahrzeug nach einem der oben genannten Ansprüche, **dadurch gekennzeichnet, dass** mittels Einsatz und Antrieb der jeweils entsprechend, mittels Tragarm (4) eingestellten Räder (3) in Kombination mit den Bandantrieben (6) Kletterfähigkeit beim Anfahren von Hindernissen, erreicht wird und ein Hindernis überwunden wird.

9. Fahrzeug nach Anspruch 8, **dadurch gekennzeichnet, dass** mittels geeigneter Steuerung und Einstellung der Tragarme (4) und der Antriebe von Rad (3) und Band (6) ein Mehrfachhindernis überwunden und befahren wird.

10. Fahrzeug nach einem der oben genannten Ansprüche, **dadurch gekennzeichnet, dass** mittels Einstellung der Tragarme (4) und Einsatz von Rad- und Bandantrieb ein Graben großer Breite überfahren wird.

11. Fahrzeug nach einem der oben genannten Ansprüche, **dadurch gekennzeichnet, dass** das zusätzliche Kettenlaufwerk (6) nur bei Überwinden von Hindernissen zugeschaltet wird.

12. Fahrzeug nach einem der oben genannten Ansprüche, **dadurch gekennzeichnet, dass** das zusätzliche Kettenlaufwerk mit speziellen Traktionsstiften, welche im Abstand über die Bandlänge angeordnet sind, ausgerüstet ist.

13. Fahrzeug nach einem der vorgenannten Ansprüche, **dadurch gekennzeichnet, dass** der Antrieb der Räder (3), ein elektrischer Radnarbenmotor, innerhalb der Felge des Rades (3) positionierte ist.

14. Fahrzeug nach Anspruch 13, **dadurch gekennzeichnet, dass** der Radnarbenmotor ein bürstenloser 3- Phasen Drehstrommotor mit einer vorgeschalteten Getriebestufe ist.

15. Fahrzeug nach einem der vorgenannten Ansprüche, **dadurch gekennzeichnet, dass** jeder Antrieb der Räder (3) einen mikrocomputergeteuerten Drehzahlsteller aufweist, der die Drehzahl entsprechend dem Lenkeinschlag unterschiedlich regelt.
